# EUROPÄISCHE PATENTSCHRIFT

(11) **EP 3 465 172 B1**
(45) Veröffentlichungstag und Bekanntmachung des Hinweises auf die Patenterteilung: **22.07.2020**
(21) Anmeldenummer: 17719273.9
(22) Anmeldetag: 26.04.2017
(51) Int. Cl.: G01N 21/90

(54) **VORRICHTUNG UND VERFAHREN ZUR INSPEKTION VON BEHÄLTNISSEN**
APPARATUS AND METHOD FOR INSPECTING CONTAINERS
DISPOSITIF ET PROCÉDÉ D'INSPECTION DE CONTENANTS

(30) Priorität: 02.06.2016 DE 102016209716
(43) Veröffentlichungstag der Anmeldung: 10.04.2019
(73) Patentinhaber: Syntegon Technology GmbH, 71332 Waiblingen (DE)
(72) Erfinder: ZVYAGOLSKAYA, Olga, 70190 Stuttgart (DE); NIELSEN, Henrik Moeller, 4700 Naestved (DK)
(74) Vertreter: DREISS Patentanwälte PartG mbB
(86) Internationale Anmeldenummer: PCT/EP2017/059905
(87) Internationale Veröffentlichungsnummer: WO 2017/207176

(56) Entgegenhaltungen:
- JP-A- H01 143 947
- US-A1- 2011 050 884
- US-A1- 2011 140 010

## Beschreibung

Die Erfindung geht aus von einer Vorrichtung und einem Verfahren zur Inspektion von Behältnissen nach der Gattung der unabhängigen Ansprüche. Eine gattungsgemäße Vorrichtung ist bekannt aus der US 7,560,720 B2. Dort werden Behältnisse über eine Zuführung und eine Transportschnecke unterschiedlichen Transporträdern zugeführt. Schließlich gelangen die zu inspizierenden Behältnisse in ein Karussell, in dessen Zentrum mehrere Kameras angeordnet sind. Reflektoren sind in geeigneter Weise angeordnet, so dass die Kameras die Behältnisse inspizieren können. Alternativ können auch zwei Kameras zur Inspektion unterschiedlicher Bereiche eines einzigen Behältnisses vorgesehen sein. Aus JP H01 143947 A ist eine Vorrichtung zur Inspektion eines Behältnisses bekannt. Zur Erzielung einer gleichmäßigen Durchleuchtung eines Behältnisses sind zum einen Faserbündel 5, 6 vorgesehen, deren Oberflächen quer zur Behältnisachse orientiert sind. Weitere Faserbündel 14, 15 sind geneigt um einen bestimmten Winkel von vielleicht 45° bezogen auf die Behältnisachse angeordnet zur Durchstrahlung des Korpus des Behältnisses.

Der Erfindung liegt die Aufgabe zugrunde, das System weiter zu vereinfachen. Diese Aufgabe wird gelöst durch die Merkmale der unabhängigen Ansprüche.

### Vorteile der Erfindung

Die erfindungsgemäße Vorrichtung und das erfindungsgemäße Verfahren zur Inspektion von Behältnissen gemäß den Merkmalen der unabhängigen Ansprüche haben demgegenüber den Vorteil, dass lediglich eine einzige Kamera für unterschiedliche Prüfungen des Behältnisses notwendig ist. Damit kann auch lediglich nur eine Prüfstation vorgesehen werden. Dies reduziert die Komplexität des Gesamtsystems. Auch der Bauraum der Maschine kann klein gehalten werden. Die Vorrichtung zeichnet sich durch kompakten Aufbau aus. Außerdem ist kein Umbau der Vorrichtung bei einem Behältniswechsel notwendig. Dadurch vereinfacht sich auch der Formatwechsel. Dies wird erfindungsgemäß dadurch erreicht, dass mit einer einzigen Kamera diese so relativ zu dem Behältnis

### Austauschseite 2

positioniert ist, dass unterschiedliche Inspektionsbereiche bzw. Inspektionen abgedeckt werden können. Hierzu wird die Kamera so angeordnet, dass die optische Achse beabstandet von der Behältnisachse verläuft, wenn sich das Behältnis in der Behältnisaufnahme befindet. Erfindungsgemäß ist die Kamera so positioniert, dass sie gleichzeitig in einem ersten Bildteil eine Draufsicht des Behältnisses und in dem anderen Bildteil eine Seitenansicht des Behältnisses, gegebenenfalls zeitversetzt, aufnehmen kann. Selbst bei unterschiedlichen Beleuchtungsarten kann auf lediglich eine einzige Kamera zurückgegriffen werden. Dadurch vereinfacht sich der Aufbau der Vorrichtung.

In einer zweckmäßigen Weiterbildung ist vorgesehen, dass das Auflicht und das Durchlicht zu unterschiedlichen Zeitpunkten eingeschaltet sind, vorzugsweise abwechselnd. Dadurch kommt es nicht zu störenden Interferenzen, weshalb sich die Zuverlässigkeit der Vorrichtung weiter erhöht.

In einer zweckmäßigen Weiterbildung ist der Reflektor zwischen der optischen Achse und einer Außenseite eines Objektivs der Kamera angeordnet. Über den Reflektor kann in einfacher Art und Weise eine Seitenansicht des Behältnisses an die Kamera weitergegeben werden, besonders bevorzugt in einem Teilbild.

In einer zweckmäßigen Weiterbildung ist vorgesehen, dass das Auflicht einen Strahlengang erzeugt, der sich von einem Strahlengang des Durchlichts unterscheidet. Aufgrund der unterschiedlichen Beleuchtungsarten können unterschiedliche Fehler zuverlässig detektiert werden.

In einer zweckmäßigen Weiterbildung bilden die Kamera, das Auflicht, das Durchlicht und der Reflektor eine Baueinheit. Besonders zweckmäßig ist die Baueinheit verstellbar ausgebildet. Dadurch kann eine schnelle und zuverlässige Anpassung an unterschiedliche Größen des zu inspizierenden Behältnisses erfolgen.

Weitere zweckmäßige Weiterbildungen ergeben sich aus weiteren abhängigen Ansprüchen und der Beschreibung.

### Zeichnung

Ein Ausführungsbeispiel der Vorrichtung und des Verfahrens zur Inspektion von Behältnissen ist in der Zeichnung dargestellt und wird nachfolgend näher beschrieben.

Es zeigen:
Die Figur 1 eine perspektivische Ansicht der Gesamtvorrichtung, in der die Vorrichtung zur Inspektion eingesetzt wird,
die Figur 2 eine schematische Seitenansicht der Vorrichtung bei einer Ampullen-Prüfung im Durchlicht,
die Figur 3 eine schematische Seitenansicht der Vorrichtung bei einer Ampullen-Prüfung im Auflicht,
die Figur 4 eine schematische Seitenansicht der Vorrichtung bei einer Vial-Prüfung im Durchlicht sowie
die Figur 5 eine schematische Seitenansicht der Vorrichtung bei einer Vial-Prüfung im Auflicht.

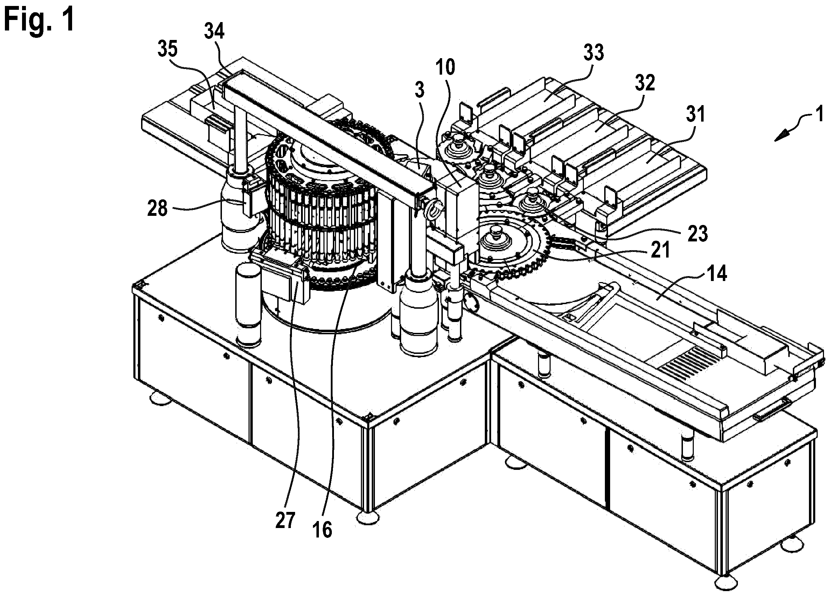

In Figur 1 ist eine perspektivische Ansicht einer Gesamtvorrichtung 1 gezeigt, welche eine Vorrichtung 10 zur Inspektion von Behältnissen 12 umfasst. Die Gesamtvorrichtung 1 umfasst zumindest eine Zuführung 14, über die die zu inspizierenden Behältnisse 12 zugeführt werden. Bei der Zuführung 14 handelt es sich beispielsweise um ein Zuführband, welches kontinuierlich genügend Behältnisse 12 in den Erfassungsbereich eines ersten Rades 21 bringt, das als Behältnisaufnahme 21 ausgebildet ist. Bei den Behältnissen 12 kann es sich beispielsweise um pharmazeutische Behältnisse handeln wie beispielsweise Ampullen, Vials, Flaschen, Karpulen oder Spritzen. Prinzipiell sind jedoch auch andere Behältnisse 12 möglich. Die Behältnisse 12 gelangen jeweils einzeln an das erste Rad 21, das als Transportrad die von der Zuführung 14 zugeführten Behältnisse 12 an der Außenseite des Rades 22 aufnimmt und weiteren Stationen bzw. Transporträdern zuführt. In dem ersten Transportrad 22 wird durch die Vorrichtung 10 zur Inspektion von Behältnissen 12 eine Vorinspektion durchgeführt wie nachfolgend näher beschrieben. Hierzu ist beispielsweise neben zumindest einer Beleuchtung eine Kamera stationär oberhalb der zu inspizierenden Behältnisse 12 angeordnet und führt geeignete, beispielsweise optische, Prüfungen durch. Lediglich für im Rahmen der Vorinspektion für gut befundene Behältnisse 12 gelangen überhaupt in ein drittes Rad 24. Ansonsten kann bereits an dieser Stelle eine Ausschleusung über ein zweites Rad 23 in eine erste Ablage 31 erfolgen.

Das erste Rad 21 bzw. die Behältnis Aufnahme 21 rotiert kontinuierlich und übergibt die entnommenen Behältnisse 12 über das weitere Rad 24 an die Vorrichtung 10 zur Inspektion von Behältnissen 12. Zwischen der Vorrichtung 10 zur Inspektion von Behältnissen 12 und einem Inspektionsmodul 16 könnte bei dem dritten Rad 24 noch zumindest ein weiteres Inspektionsmodul 3 vorgesehen sein. Dieses Inspektionsmodul 3 könnte beispielsweise eine sogenannte kosmetische Inspektion des Behältnisses 12 durchführen. Auch dieses weitere Inspektionsmodul 3 könnte beispielsweise auf optischen Prinzipien unter Verwendung einer Beleuchtung und einer Kamera basieren. Weitere Inspektionen sind je nach Bedarf möglich.

Das Inspektionsmodul 16 ist beispielsweise als Inspektionskarussell ausgebildet. Das Inspektionsmodul 16 ist hierbei im Wesentlichen zylinderförmig und dreht sich im Ausführungsbeispiel im Uhrzeigersinn. In dem Inspektionsmodul 16 erfolgt die Überprüfung der zugeführten Behältnisse 12 unter Verwendung einer bestimmten Beleuchtung 27 und einer oder mehrerer Kamera(s). Das Inspektionsmodul 16 bewegt die Behältnisse 12 im Uhrzeigersinn von dem Erfassungsbereich einer ersten Beleuchtung 27 in den Erfassungsbereich einer optionalen weiteren Beleuchtung 28. hier kann eine Verifikation des vorherigen Inspektionsablaufs vorgenommen werden. Das Inspektionsmodul 16 umfasst einen sich drehenden Inspektionstisch, der scheibenförmig ausgebildet ist und an dem die Behältnisse 12 gehalten werden. In der Mitte des Inspektionsmoduls 16 befindet sich zumindest eine Kamera und/oder zumindest ein Reflektor, die feststehend gegenüber dem Inspektionstisch angeordnet ist/sind.

Die inspizierten Behältnisse 12 werden über weitere nicht eigens bezeichnete Räder bzw. Transporträder von dem Inspektionsmodul 16 je nach detektiertem Zustand des Behältnisses 12 unterschiedlichen Ablagen 31 - 35 zugeführt.

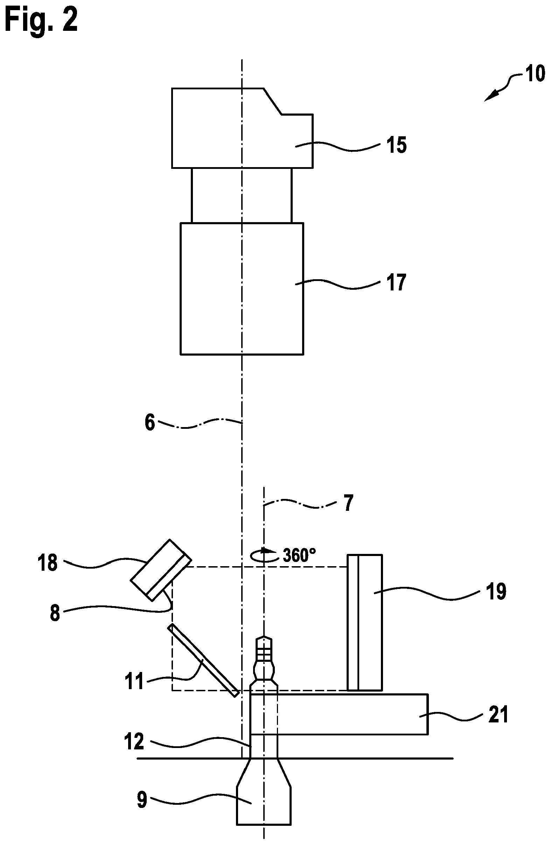

In Figur 2 ist die Vorrichtung 10 zur Inspektion von Behältnissen 12 genauer gezeigt. Das zu inspizierende Behältnis 12 befindet sich in einer Behältnisaufnahme 21, vorzugsweise ein Rad bzw. ein Sternrad. Die Behältnisaufnahme 21 nimmt noch weitere Behältnisse 12 auf, was nicht dargestellt ist. Die Behältnisaufnahme 21 dreht sich nach erfolgter optischer Inspektion weiter, so dass das nächste zu inspizierende Behältnis 12 in den Erfassungsbereich einer Kamera 15 gelangt.

Der Boden des Behältnisses 12 befindet sich auf einem Aufnahmemittel 9. Das Aufnahmemittel 9 ist beispielsweise eine Führungsschiene, die unterhalb vom Außenrand des Sternrades verläuft. Die Rotation des Behältnisses 12 erfolgt durch Kontakt der Außenseite des Behältnisses 12 mit einem Bandantrieb, was in der Zeichnung nicht dargestellt ist. Vorzugsweise erfolgt eine Drehung um 360° wie mit dem entsprechenden Pfeil angedeutet.

Das Behältnis 12 ist vorzugsweise rotationssymmetrisch ausgebildet. Das Behältnis 12 weist eine Behältnisachse 7 auf. Die Behältnisachse 7 verläuft vorzugsweise parallel zur Rotationsachse eines rotationssymmetrischen Behältnisses bzw. parallel zur Längsachse eines Behältnisses 12, wobei die Längsachse vom Kopf bis zum Boden des Behältnisses 12 verläuft. Die Behältnisaufnahme 21 umschließt das Behältnis 12 zumindest teilweise unterhalb des Kopfes. Insbesondere eignen sich die Vorrichtung 10 mit dem zugehörigen Verfahren zur Inspektion des Kopfbereichs des Behältnisses 12.

Oberhalb des Behältnisses 12 ist eine Kamera 15 mit einem Objektiv 17 und gegebenenfalls einem Filter 13, beispielsweise ein Polfilter, angeordnet. Hierbei ist die Kamera 15 vorzugsweise so angeordnet, dass eine optische Achse 6 der Kamera 15 parallel zur Behältnisachse 7 verläuft. Die optische Achse 6 der Kamera 15 verläuft in etwa durch die Mitte des Objektivs 17. Die Kamera 15 ist so positioniert, dass die optische Achse 6 der Kamera 15 zwar parallel, jedoch etwas versetzt bzw. beanstandet zu der Behältnisachse 7 ausgerichtet ist.

Ein Durchlicht 19 erzeugt einen im Wesentlichen senkrecht zur optischen Achse 6 und/oder Behältnisachse 7 gerichteten Strahlengang, ist also seitlich auf das Behältnis 12 gerichtet. Das Durchlicht 19 erstreckt sich vorzugsweise parallel zur optischen Achse 6 bzw. Behältnisachse 7 oberhalb der Behältnisaufnahme 21 in Richtung zur Kamera 15. Dadurch kann das Durchlicht 19 zumindest den Kopfbereich des Behältnisses 12 sicher beleuchten, auch bei Behältnissen 12 mit größeren Abmessungen. Auf der gegenüberliegenden Seite des Durchlichts 19 ist ein Reflektor 11, vorzugsweise ein Spiegel, angeordnet. Der Reflektor 11 ist so orientiert, dass ein dort auftreffender Strahlengang des Durchlichts 19 zum Objektiv 17 der Kamera 15 gelenkt wird. Vorzugsweise ist der Reflektor 11 um 45° geneigt zur optischen Achse der Kamera 15 angeordnet. Der Reflektor 11 erstreckt sich in Richtung zum Behältnis 12 bis zur optischen Achse 6. Die andere Seite des Reflektors 11 ist so dimensioniert, dass die Spitze des Behältnisses 12, gegebenenfalls auch größerer Behältnisse 12, zuverlässig im Erfassungsbereich der Kamera 15 liegt.

Ein Auflicht 18 erzeugt einen Strahlengang, der vorzugsweise seitlich bzw. von oben auf das Behältnis 12 bzw. den Kopf des Behältnisses 12 gerichtet ist. Im Ausführungsbeispiel ist das Auflicht 18 so orientiert, dass sein Strahlengang im Wesentlichen mit einem Winkel von 45° - innerhalb einer gewissen Bandbreite - auf die optische Achse 6 bzw. die Behältnisachse 7 auftrifft. Der Strahlengang des Auflichts 18 verläuft parallel zur Oberfläche des Reflektors 11. Hierbei ist das Auflicht 18 so dimensioniert und positioniert, dass die äußerste Grenze des Strahlengangs, der benachbart zum Reflektor 11 liegt, jenseits der optischen Achse 6 auf das Behältnis 12 trifft. Damit kann die Kamera 15 ein erstes Teilbild eines Bildes aufnehmen, das im Ausführungsbeispiel in der rechten Hälfte von der optischen Achse 6 liegt und die sogenannte Topansicht des Behältnisses 12 darstellt. Der linke Teil bezogen auf die optische Achse 6 ist einem weiteren Teilbild für ein Bild des Behältnisses 12 vorbehalten, das je nach Prüfung entweder mit dem Auflicht 18 oder mit dem Durchlicht 19 durchleuchtet und über den Reflektor 11 an die Kamera 15 weitergeleitet wird. Das Auflicht 18 ist hierbei so dimensioniert und positioniert, dass die andere Seite des Strahlengangs des Auflichts 18 die Spitze des Behältnisses 12 sicher beleuchtet. Bei dem Auflicht 18 und/oder dem Durchlicht 19 kann ein geeigneter optischer Filter 8, beispielsweise ein Polfilter, vorgeschaltet sein.

Die beschriebene Vorrichtung 10 zur Inspektion ist nun in der Lage, unterschiedliche Prüfungen bei unterschiedlichen Behältnistypen, beispielsweise Ampulle und Vial, vorzunehmen. Die Inspektion wird beispielsweise an einem Einlaufsternrad als mögliche Behältnisaufnahme 21 vorgenommen. Eine Vielzahl von Behältnissen 12 werden über eine Zuführung 14, beispielsweise ein Transportband, der Behältnisaufnahme 21 zugeführt. Das Behältnis 12 wird beim Transport (die Transportrichtung ist gemäß der Zeichnung in die Bildebene hinein), gleichzeitig mithilfe von einem Bandantrieb um die eigene Achse um mindestens 360° rotiert. Während der Rotation werden vorzugsweise mit einer als Kamera 15 verwendeten Flächensensorkamera bzw. Farbkamera X Bilder aufgenommen, was eine Inspektion des Behältnisses 12 von allen Seiten ermöglicht. Die Vorrichtung 10 enthält wie beschrieben zwei unterschiedliche Beleuchtungstypen, nämlich eine Beleuchtung als Durchlicht 19 und eine Beleuchtung als Auflicht 18. Beide Beleuchtungen werden phasenversetzt in einem sogenannten Stroboskop-Modus betrieben. Eine vorzugsweise als moderne Farbkamera ausgeführte Kamera 15 mit ausreichend hoher Bildaufnahmefrequenz ermöglicht die Aufzeichnung von zwei unterschiedlichen Bildtypen im alternierenden Modus. Dank des Reflektors 11, der bevorzugt als Spiegel ausgeführt ist, kann die Seitenansicht des Behältnisses 12 aufgenommen werden. Gleichzeitig kann die oberhalb des Behältnisses 12 positionierte Kamera 15 die Draufsicht (Topansicht) des Behältnisses 12 aufnehmen. Wie bereits beschrieben ist die optische Achse 6 der Kamera 15 so positioniert, dass gleichzeitig in der einen Bildhälfte die Draufsicht des Behältnisses 12 und in der anderen Bildhälfte eine weitere Ansicht, beispielsweise die Seitenansicht des Behältnisses 12, vereint werden. Somit wird eine parallele Inspektion von unterschiedlichen Defekttypen möglich. Die Aufnahme des Bildes kann gekoppelt sein an die Aktivierung der Beleuchtung, also des Durchlichts 19 bzw. Auflichts 18.

Sämtliche Optikkomponenten (Kamera 15, Beleuchtungen 18, 19, Reflektor 11) sind in einem Gehäuse fest montiert. Bei einem Format-bzw. Behältniswechsel muss lediglich die Höhe der ganzen Einheit verändert werden. Damit entfällt eine komplizierte Umrüstung bei Behältnis- bzw. Formatwechsel.

In Figur 2 ist eine erste Prüfung eines als Ampulle ausgeführten Behältnisses 12 gezeigt. Diese Prüfung erfolgt im Durchlicht 19. Das Durchlicht 19 ist eingeschaltet, das Auflicht 18 ist ausgeschaltet. Der Reflektor 11 lenkt den Strahlengang des durch das Durchlicht 19 durchstrahlten Behältnisses 12 auf die linke Bildhälfte der Kamera 15. Das Bild kann nun hinsichtlich der Höhe der Spitze des Behältnisses 12, der Form der Spitze des Behältnisses 12 und eine sogenannte Schwarzbrenner-Prüfung (korrekter Ampullenverschluss) ausgewertet werden. Hierbei handelt es sich um beim Verschweißen der Ampulle oxidierte kohlenstoffhaltige Produktreste im inneren Bereich der Ampullenspitze.

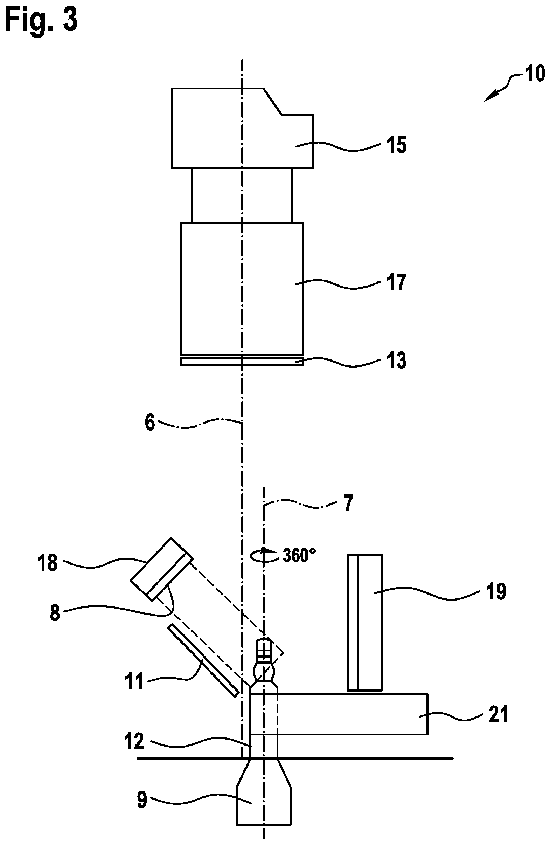

Das Behältnis 12 verbleibt im Erfassungsbereich der Kamera 15 für eine weitere Prüfung wie in Figur 3 dargestellt. Diese Prüfung erfolgt im Auflicht 18. Das Durchlicht 19 ist ausgeschaltet, das Auflicht 18 ist eingeschaltet. Das Auflicht 18 ist so positioniert, dass sowohl die Spitze des Behältnisses 12 wie auch der Hals des Behältnisses 12 belichtet werden. Das zugehörige Bild nimmt nun die Kamera 15 in der linken Bildhälfte, links der optischen Achse 6 auf. Im Auflicht 18 können die Farbmerkmale des Behältnisses 12, in diesem Fall der Ampulle, geprüft werden. Das Licht vom Auflicht 18 kommend wird an den Farbmerkmalen des Behältnisses 12 reflektiert und über den Reflektor 11 in der linken Bildhälfte der Kamera 15 abgebildet. Zu den Farbmerkmalen der Ampulle gehören beispielsweise Farbringe (Produktetikettierung mit Hilfe eines Farbcodes, dabei können bis zu drei Ringe verwendet werden). Als weiteres Farbmerkmal der Ampulle dient eine sogenannte OPC (One Point Cut) Markierung (eine Ampulle weist im Halsbereich eine kleine Kerbe auf. Die Position der Kerbe ist oberhalb der Kerbe mit einem OPC-Punkt markiert. Wenn man auf die entsprechende Stelle Druck ausübt, kann die Ampullenspitze abgebrochen werden, wodurch das Öffnen der Ampulle ermöglicht wird). Als weiteres Farbmerkmal kann ein sogenannter Cut-Ring (eine Ampulle weist im Halsbereich anstatt einer kleinen Kerbe eine durchgehende Kerbe rings um den Hals auf. Zum Öffnen der Ampulle kann Druck auf jeder Stelle angewendet werden. Die Position der Längskerbe ist mit einem Ring markiert) verwendet werden.

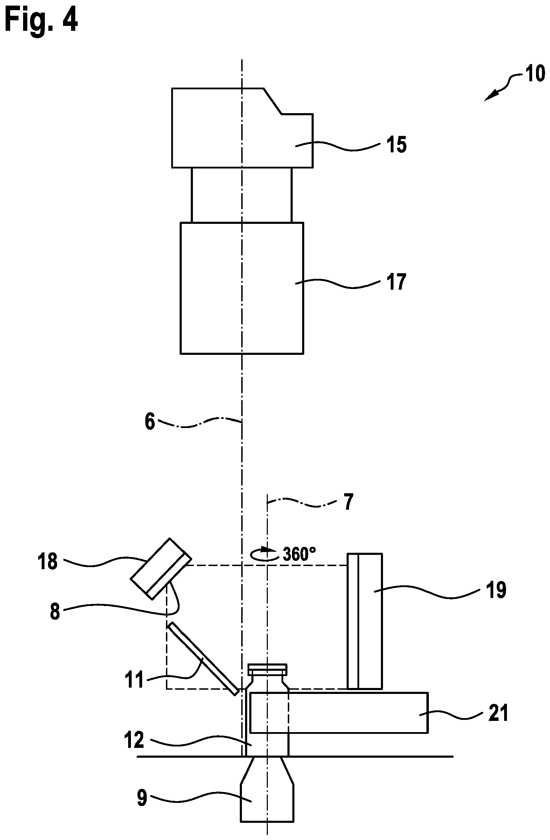

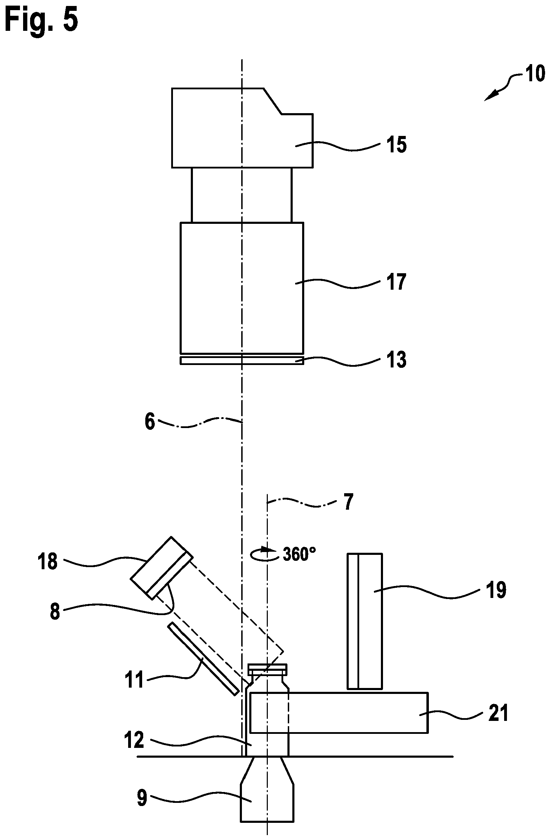

Dieselbe Vorrichtung 10 zur Inspektion kann auch für einen anderen Behältertyp verwendet werden. Gemäß der Ausführungsbeispiele der Figuren 4 und 5 wird nun als Behältnis 12 ein sogenanntes Vial geprüft. Dieses Behältnis 12 ist mit einem Behältnisdeckel bzw. Stopfen verschlossen. In Figur 4 ist eine erste Prüfung eines als Vial ausgeführten Behältnisses 12 gezeigt. Diese Prüfung erfolgt im Durchlicht 19. Das Durchlicht 19 ist eingeschaltet, das Auflicht 18 ist ausgeschaltet. Der Reflektor 11 lenkt den Strahlengang des durch das Durchlicht 19 durchstrahlten Behältnisses 12 auf die linke Bildhälfte der Kamera 15. Das Bild kann nun beispielsweise auf die Präsenz des Verschlusses, die Höhe des Verschlusses und/oder die Neigung des Verschlusses relativ zur Behältnisachse 7 ausgewertet werden.

Das Behältnis 12 verbleibt im Erfassungsbereich der Kamera 15 für eine weitere Prüfung wie in Figur 5 dargestellt. Diese Prüfung erfolgt im Auflicht 18. Das Durchlicht 19 ist ausgeschaltet, das Auflicht 18 ist eingeschaltet. Das Auflicht 18 ist so positioniert, dass sowohl die Spitze des Behältnisses 12 wie auch der Hals des Behältnisses 12 belichtet werden. Das zugehörige Bild mit der Topansicht des Behältnisses 12 nimmt nun die Kamera 15 in der rechten Bildhälfte, rechts der optischen Achse 6 auf. Die Seitenansicht des Behältnisses 12 über den Reflektor 11 umgelenkt nimmt die Kamera 15 in der linken Bildhälfte, links der optischen Achse 6 auf. Im Auflicht 18 kann beispielsweise der Verschluss von oben aufgenommen werden. So können beispielsweise die Farbe, der aufgedruckte Text, Kratzer (direkte Abbildung ohne Reflektor 11) und/oder auf der Bördelungen (bei einem durch Bördelung verschlossenen Behältnisses) aufgedruckte Text bzw. Matrixcode (Abbildung über den Reflektor 11) geprüft werden. Im letzten Fall könnte das Bild auch über die linke Bildhälfte bezogen auf die optische Achse 6 zur Auswertung herangezogen werden.

Die genannten Auswertungen sind lediglich Beispiele für mögliche Prüfungen, die je nach eingesetztem Behältnis 12 und/oder Verschluss variieren können.

Wesentlich ist die Möglichkeit, mit ein und derselben Kamera 15 unterschiedliche Bilder aufzunehmen, vorzugsweise einmal im Auflicht, andernfalls im Durchlicht. Hierbei erfolgt die Steuerung bzw. Aufnahme der Kamera 15 in Abhängigkeit von der Ansteuerung des Durchlichts 19 und Auflichts 18. Weiterhin wird eine Bildsequenz aufgenommen in Abhängigkeit bzw. während der Rotation des Behältnisses 12.

Die Vorrichtung und das Verfahren zur Inspektion von Behältnissen 12 eignet sich insbesondere in der pharmazeutischen Industrie zur Inspektion von in Behältnissen 12 abgefüllten flüssigen oder festen Pharmazeutika. Die Verwendung ist jedoch hierauf nicht eingeschränkt. Auch andere in Behältnissen 12 wie Verpackungsbeuteln, Schlauchbeuteln, Kartons oder ähnliches verpackte Produkte wie beispielsweise Lebensmittel etc. könnten in der beschriebenen Vorrichtung 10 und mit dem beschriebenen Verfahren inspiziert werden.

## Patentansprüche

1. Vorrichtung zur Inspektion eines Behältnisses (12), umfassend zumindest eine Kamera (15) mit einer optischen Achse (6) zur Inspektion zumindest eines Behältnisses (12), das eine Behältnisachse (7) aufweist, zumindest eine Behältnisaufnahme (21) zur Aufnahme des zu inspizierenden Behältnisses (12),
zumindest ein Auflicht (18) zur Beleuchtung des zu inspizierenden Behältnisses (12), insbesondere eines Kopfbereichs des Behältnisses (12), zumindest ein Durchlicht (19) zur Durchleuchtung des zu inspizierenden Behältnisses (12), zumindest einen Reflektor (11), der einen Strahlengang des Auflichts (18) und/oder des Durchlichts (19) zu der Kamera (15) reflektiert, wobei die optische Achse (6) beabstandet von der Behältnisachse (7) verläuft, wenn sich das Behältnis (12) in der Behältnisaufnahme (21) befindet, **dadurch gekennzeichnet, dass** die Kamera (15) so positioniert ist, dass gleichzeitig in einem ersten Bildteil des von der Kamera (15) aufgenommenen Bildes eine Draufsicht des Behältnisses (12) und in dem anderen Bildteil eine weitere Ansicht des Behältnisses (12), insbesondere eine Seitenansicht des Behältnisses (12) im Durchlicht (19) oder eine Reflexion des Behältnisses (12) im Auflicht (18), aufnehmbar ist.

2. Vorrichtung nach Anspruch 1, **dadurch gekennzeichnet, dass** das Auflicht (18) und das Durchlicht (19) zu unterschiedlichen Zeitpunkten eingeschaltet sind, vorzugsweise abwechselnd.

3. Vorrichtung nach einem der vorhergehenden Ansprüche, **dadurch gekennzeichnet, dass** der Reflektor (11) zwischen der optischen Achse (6) und einer Außenseite eines Objektivs (17) der Kamera (15) angeordnet ist.

4. Vorrichtung nach einem der vorhergehenden Ansprüche, **dadurch gekennzeichnet, dass** das Auflicht (18) einen Strahlengang erzeugt, der sich von einem Strahlengang des Durchlichts (19) unterscheidet.

5. Vorrichtung nach einem der vorhergehenden Ansprüche, **dadurch gekennzeichnet, dass** die Kamera (15), das Auflicht (18), das Durchlicht (19) und der Reflektor (11) eine Baueinheit bilden.

6. Vorrichtung nach einem der vorhergehenden Ansprüche, **dadurch gekennzeichnet, dass** die Baueinheit verstellbar zur Anpassung an unterschiedliche Größen des zu inspizierenden Behältnisses (12) ausgebildet ist.

7. Verfahren zur Inspektion von Behältnissen (12), wobei
zumindest eine Kamera (15) mit einer optischen Achse (6) zumindest das Behältnis (12), das eine Behältnisachse (7) aufweist, inspiziert,
wobei das Behältnis (12) in zumindest einer Behältnisaufnahme (21) aufgenommen wird,
wobei das Behältnis (12) durch zumindest ein Auflicht (18), insbesondere eines Kopfbereichs des Behältnisses (12), beleuchtet wird, wobei das Behältnis (12) durch zumindest ein Durchlicht (19) durchleuchtet wird, wobei zumindest einen Reflektor (11) einen Strahlengang des Auflichts (18) und/oder des Durchlichts (19) zu der Kamera (15) reflektiert, wobei die Kamera (15) so angeordnet wird, dass die optische Achse (6) beabstandet von der Behältnisachse (7) verläuft, wenn sich das Behältnis (12) in der Behältnisaufnahme (21) befindet, **dadurch gekennzeichnet, dass** die Kamera (15) in einem ersten Bildteil eine Draufsicht des Behältnisses (12) und in dem anderen Bildteil eine Seitenansicht des Behältnisses (12) aufnimmt.

8. Verfahren nach dem vorhergehenden Verfahrensanspruch, **dadurch gekennzeichnet, dass** das Auflicht (18) und das Durchlicht (19) zu unterschiedlichen Zeitpunkten eingeschaltet werden, vorzugsweise abwechselnd.

9. Verfahren nach einem der vorhergehenden Verfahrensansprüche, **dadurch gekennzeichnet, dass** der Reflektor (11) zwischen der optischen Achse (6) und einer Außenseite eines Objektivs (17) der Kamera (15) angeordnet wird.

## Claims

1. Device for inspecting a container (12), comprising at least one camera (15) with an optical axis (6) for inspecting at least one container (12) which has a container axis (7), at least one receptacle (21) for receiving the container (12) to be inspected),
at least one incident light (18) for illuminating the container (12) to be inspected, in particular a head area of the container (12),
at least one transmitted light (19) for transilluminating the container (12) to be inspected, at least one reflector (11) which reflects a beam path of the incident light (18) and/or the transmitted light (19) to the camera (15),
wherein the optical axis (6) is spaced apart from the container axis (7) when the container (12) is in the receptacle (21),
**characterized in that**
the camera (15) is positioned such that simultaneously in a first part of the image recorded by the camera (15) a top view of the container (12) and in the other image part a further view of the container (12), in particular a side view of the container (12) in transmitted light (19) or a reflection of the container (12) in incident light (18), can be recorded.

2. Device according to claim 1, **characterized in that** the incident light (18) and the transmitted light (19) are switched on at different times, preferably alternately.

3. Device according to any of the preceding claims, **characterized in that** the reflector (11) is arranged between the optical axis (6) and an outside of an objective (17) of the camera (15).

4. Device according to one of the preceding claims, **characterized in that** the incident light (18) produces an optical path which is different from an optical path of the transmitted light (19).

5. Device according to one of the preceding claims, **characterized in that** the camera (15), the incident light (18), the transmitted light (19) and the reflector (11) form a structural unit.

6. Device according to one of the preceding claims, **characterized in that** the structural unit is configured to be adjustable for adaptation to different sizes of the container (12) to be inspected.

7. Method for inspecting containers (12), wherein
at least one camera (15) with an optical axis (6) inspects at least the container (12) which has a container axis (7),
wherein the container (12) is received in at least one receptacle (21),
wherein the container (12) is illuminated by at least one incident light (18), in particular of a head region of the container (12),
wherein the container (12) is transilluminated by at least one transmitted light (19),
wherein at least one reflector (11) reflects a beam path of the incident light (18) and/or the transmitted light (19) to the camera (15),
wherein the camera (15) is arranged such that the optical axis (6) is spaced from the container axis (7) when the container (12) is located in the receptacle (21),
**characterized in that** the camera (15) shows in a first part of the image a top view of the container (12) and in the other part of image shows a side view of the container (12).

8. Method according to the preceding method claim, **characterized in that** the incident light (18) and the transmitted light (19) are switched on at different times, preferably alternately.

9. Method according to one of the preceding method claims, **characterized in that** the reflector (11) is arranged between the optical axis (6) and an outside of an objective (17) of the camera (15).

## Revendications

1. Dispositif pour inspecter un contenant (12), comprenant au moins une caméra (15) avec un axe optique (6) pour inspecter au moins un contenant (12), qui présente un axe de contenant (7), au moins un logement de contenant (21) pour loger le contenant (12) à inspecter,
au moins une lumière réfléchie (18) pour éclairer le contenant (12) à inspecter, en particulier une zone de tête du contenant (12),
au moins une lumière transmise (19) pour éclairer par transmission le contenant (12) à inspecter, au moins un réflecteur (11), qui réfléchit un chemin optique de la lumière réfléchie (18) et/ou de la lumière transmise (19) vers la caméra (15), dans lequel l'axe optique (96) s'étend à distance de l'axe de contenant (7), lorsque le contenant (12) se trouve dans le logement de contenant (21), **caractérisé en ce que** la caméra (15) est positionnée de sorte qu'une vue de dessus du contenant (12) peut être enregistrée dans une première partie d'image de l'image enregistrée par la caméra (15), et une autre vue du contenant (12), en particulier une vue latérale du contenant (12) dans la lumière transmise (19) ou une réflexion du contenant (12) dans la lumière réfléchie (18), peut être enregistrée simultanément dans l'autre partie d'image.

2. Dispositif selon la revendication 1, **caractérisé en ce que** la lumière réfléchie (18) et la lumière transmise (19) sont allumées à différents moments, de préférence en alternance.

3. Dispositif selon l'une quelconque des revendications précédentes, **caractérisé en ce que** le réflecteur (11) est disposé entre l'axe optique (6) et une face extérieure d'un objectif (17) de la caméra (15).

4. Dispositif selon l'une quelconque des revendications précédentes, **caractérisé en ce que** la lumière réfléchie (18) génère un chemin optique, qui se différencie d'un chemin optique de la lumière transmise (19).

5. Dispositif selon l'une quelconque des revendications précédentes, **caractérisé en ce que** la caméra (15), la lumière réfléchie (18), la lumière transmise (19) et le réflecteur (11) forment une unité modulaire.

6. Dispositif selon l'une quelconque des revendications précédentes, **caractérisé en ce que** l'unité modulaire est réalisée de manière réglable aux fins d'adaptation à différentes tailles du contenant (12) à inspecter.

7. Procédé d'inspection de contenants (12), dans lequel
au moins une caméra (15) avec un axe optique (6) inspecte au moins le contenant (12), qui présente un axe de contenant (7), dans lequel le contenant (12) est logé dans au moins un logement de contenant (21),
dans lequel le contenant (12) est éclairé par au moins une lumière réfléchie (18), en particulier d'une zone de tête du contenant (12), dans lequel le contenant (12) est éclairé par transmission par au moins une lumière transmise (19), dans lequel au moins un réflecteur (11) réfléchit un chemin optique de la lumière réfléchie (18) et/ou de la lumière transmise (19) vers la caméra (15), dans lequel la caméra (15) est disposée de sorte que l'axe optique (6) s'étend à distance de l'axe de contenant (7), lorsque le contenant (12) se trouve dans le logement de contenant (21), **caractérisé en ce que** la caméra (15) enregistre dans une première partie d'image une vue de dessus du contenant (12) et dans l'autre partie d'image une vue latérale du contenant (12).

8. Procédé selon la revendication précédente, **caractérisé en ce que** la lumière réfléchie (18) et la lumière transmise (19) sont allumées à différents moments, de préférence en alternance.

9. Procédé selon l'une quelconque des revendications précédentes, **caractérisé en ce que** le réflecteur (11) est disposé entre l'axe optique (6) et une face extérieure d'un objectif (17) de la caméra (15).
